# EUROPÄISCHE PATENTANMELDUNG

(11) **EP 2 594 837 A1**
(43) Veröffentlichungstag der Anmeldung: **22.05.2013**
(21) Anmeldenummer: 12007500.7
(22) Anmeldetag: 03.11.2012
(51) Int. Cl.: F16L 55/11

(54) **Verschlusselement für Rohre**

(30) Priorität: 15.11.2011 DE 102011118494
(71) Anmelder: Müller, Michael, 96047 Bamberg (DE)
(72) Erfinder: Müller, Michael, 96047 Bamberg (DE)
(74) Vertreter: Ellspermann, Ina

(57) **Zusammenfassung**

Bei einem Verschlusselement zum fluiddichten Verschließen von Öffnungen oder Rohren (1, 2) in Betonbauteilen mit einem Stopfenkörper (3), der einen zylindrischen oder konischen Schaft (31) aufweist, wobei der Schaft (31) an seinem Außenmantel mit einem Dicht- oder Befestigungselement versehen ist, ist vorgesehen, dass als Dicht- oder Befestigungselement ein einzelner separater Sicherungsring (4) angeordnet ist, der eine größere Härte und / oder größere Festigkeit als der Schaft (31) des Stopfenkörpers (3) und des Hüllrohres (1, 2) aufweist und der einen größeren Außendurchmesser d2 als ein Innendurchmesser der Öffnung oder ein Innendurchmesser des Rohres(1, 2) besitzt.

## Beschreibung

Die Erfindung betrifft ein Verschlusselement gemäß dem Oberbegriff des Patentanspruchs 1.

Bei der Herstellung von Betonkonstruktionen kommen Schalungselemente zum Einsatz, die vor dem Einbringen des flüssigen Betons in einem definierten Abstand zu einander aufgestellt und fixiert werden müssen. Zur Aufnahme der hohen Kräfte aus dem Beton sind zur Fixierung der Schalungselemente Spannanker vorgesehen, die flächig über die Schalungselemente angeordnet werden. Die Spannanker werden von einer Außenweite in eine Öffnung eines Schalungselementes geführt und mittels eines Spannelements oder einer Mutter auf der Außenseite des zweiten Schatungselementes verspannt. Zwischen den Schatlungselementen ist ein Distanzrohr angeordnet, das der Dicke des fertigen Betonelements entspricht und in welchem der Spannanker verläuft.

Nach dem Aushärten des Betons werden die Spannanker und die Schalungselemente wieder entfernt. Das Schalungsbindelement verbleibt im Beton. Der Hohlraum muss entsprechend verschlossen werden.

Insbesondere im Tiefbau müssen Betonkonstruktionen häufig druckwasserdicht sein. Bei diesen Konstruktionen besteht das Erfordernis, dass die zurückbleibenden Öffnungen der im Beton verbliebenen Distanzrohren wasserdicht verschlossen werden müssen.

Aus der DE 199 51 359 C1 ist ein verschließbarer Distanzhalter für Betonschalungswände bekannt, dessen Verschlussstopfen Rastmittel aufweisen, die mit Vertiefungen an den Endstücken der Distanzhalter zusammenwirken. Außerdem weisen die Endstücke, einen Falz auf, in dem ein Dichtungsring, der an dem Verschlussstopfen angeordnet ist, nach dem Verschließen aufgenommen werden kann.

Weiterhin ist aus der DE 20 2008 012 973 U1 ein Verschlussstopfen zum fluiddichten Verschließen von Öffnungen in Betonbauteilen bekannt, der mit seinem Kopf unmittelbar an der Oberfläche des Betonbauteils anliegt und die Öffnung mit seinem Schaft verschließt, wobei der Schaft mit einem Dicht- und Befestigungselement versehen ist, das einen geringfügig größeren Außendurchmesser als der Innendurchmesser der Öffnung aufweist.

Außerdem offenbart die DE 3433575 A1 einen Stopfen zum Verschließen von Hüllrohren im Betonbau, der außen als elastisches Profil ausgebildet, das einseitig ausgerichtete Rippen aufweist. Aufgrund der Elastizität kann der Stopfen leicht in das Hüllrohr eingetrieben werden und soll sich nach dem Einbringen im Hüllrohr verkeilen.

Häufig fallen die Dichtigkeitsprüfungen bei bekannten Verschlussstopfen negativ aus. Vor diesem Hintergrund besteht die Aufgabe der Erfindung daher darin, einen Verschlusstopfen zum fluiddichten Verschließen eines Rohres, insbesondere eines Hüll- oder Distanzrohres bzw. der damit verbundenen Öffnungen in Betonbauteilen zu verbessern.

Die Aufgabe wird durch ein Verschlusselement mit den Merkmalen des Patentanspruchs 1 gelöst. Vorteilhafte Weiterbildungen sind Gegenstand von Unteransprüchen.

Mit der Erfindung wird ein Verschlusselement zum fluiddichten Verschließen von Öffnungen oder Rohren in Betonbauteilen bereitgestellt, das einem Innendruck von 6,5 bar standhalten kann. Die Distanzrohre oder Hüllrohre, die die Spannanker zum Fixieren der Betonschalungswände während der Betonierphase umhüllen, verbleiben nach dem Ausschalen in den Betonwänden. Häufig sind an den Distanz- oder Hüllrohren Endstücke in Form eines Sperrkonus vorgesehen, die dicht aber taumelnd angeordnet sind. Damit wird erreicht, dass die Endstücke immer flächig an den Schalungswänden anliegen. Die Öffnungen, die sich durch den Verbleib der Distanz- oder Hüllrohre bzw. durch deren Endstücke ergeben, werden fluiddicht oder druckwasserdicht mit dem Verschlusselement, das einen Stopfenkörper, der wiederum einen zylindrischen oder konischen Schaft aufweist, verschlossen. Weiterhin besitzt der Stopfenkörper eine Schlagfläche oder einen Stopfendeckel. Zusätzlich ist der Schaft des Verschlusselements an seinem Außenmantel mit einem Dicht- oder Befestigungselement versehen. Die Verschlusselemente werden üblicherweise an beiden Seiten des Betonbauteils in die Öffnungen oder die Rohröffnungen eingebracht, wobei die Verschlusselemente dann gegensinnig orientiert sind. Die Verschlusselemente sind somit auf der einen Seite dem eindringenden Wasser zugewandt und auf der anderen Seite des Betonbauteils dem eindringenden Wasser abgewandt. Üblicherweise werden die Verschlusselemente mit einem Hammer in die Rohröffnungen oder Öffnungen eingeschlagen. Die Einheit aus Distanzrohr, zwei Endstücken und den zugehörigen Verschlusselementen wird dabei auch als Schalungsbindeelement bezeichnet.

Erfindungsgemäß ist bei dem Verschlusselement als Dicht- oder Befestigungselement ein einzelner separater Sicherungsring vorgesehen. Dieser Sicherungsring weist eine größere Härte und / oder Festigkeit als der Schaft des Stopfenkörpers und eine größere Härte und / oder Festigkeit als das Rohr auf. Zudem ist der Außendurchmesser des Sicherungsrings größer als der Innendurchmesser der Öffnung oder des Rohrs im Befestigungsbereich. Beim Einbringen des Verschlusselements verformt der Sicherungsring aufgrund der auf ihn aufgebrachten Kraft den Stopfenkörper und den Innenmantel des Rohres und geht somit eine formschlüssige Verbindung mit beiden Bauteilen ein. Dadurch kann der Sicherungsring gleichzeitig die Befestigungs- und Dichtfunktion übernehmen. Mit dem erfindungsgemäßen Verschlusselement kann die Öffnung bzw. das Rohr gegen anstehenden Wasserdruck von innen und von außen fluiddicht oder druckwasserdicht verschlossen werden.

Vorteilhafterweise weist der Sicherungsring einen größeren Außendurchmesser d2 auf als der Außendurchmesser d1 des Stopfenkörpers im Dicht- oder Befestigungsbereich. Weiterhin ist an dem Verschlusselement, vorzugsweise am Schaft oder Außenmantel des Stopfenkörpers ein Falz, eine Ringschulter oder eine Nut zur Lagerung des Sicherungsrings vorgesehen.

Bei einem Verschlusselement mit einem konischen Schaft kann das Verschlusselement somit bis zum Falz oder der Ringschulter ohne Druck in die vorhandene Öffnung eingeschoben werden, da der Außendurchmesser des Verschlusselements in diesem Bereich kleiner als der Innendurchmesser des Rohres ist. Beim weiteren Einschieben oder Einschlagen des Verschlusselements mit dem daran angeordneten Sicherungsring erreicht das Verschlusselement dann den Bereich des Rohres, an welchem der Außendurchmesser d2 des Sicherungsringes größer als der Innendurchmesser des Rohres ist, so dass aufgrund des härteren Materials und / oder aufgrund der höheren Festigkeit des Sicherungsrings unter der oben genannten Krafteinwirkung die Verformung des Materials des Rohres erfolgt.

Gemäß einer vorteilhaften Ausgestaltung der Erfindung ist das Verschlusselement mit einer Stopp- oder Anschlageinrichtung versehen, die seine Axialposition in der Öffnung wenigstens in die Einschub-oder Einschlagrichtung begrenzt. Die Stopppostion ist dabei die Position, bei der die Außenseite des Verschlusselements mit der Außenkante des Rohres oder dessen Endstück in einer Ebene liegt. In dieser Position hat das Verschlusselement seine Befestigungsposition erreicht und der Sicherungsring hat sowohl Rohr als auch den Stopfenkörper verformt.

Durch die bündige Anordnung von Rohr und Verschlusselement ergibt sich eine glatte Oberfläche an der ausgeschalten Wand und ermöglicht eine einfache Kontrolle des Sitzes der Verschlusselemente.

Der Sicherungsring kann dabei einen rechteckigen Querschnitt aufweisen. Dies bedeutet, dass dieser nicht in besonderer Art und Weise geschliffen oder gefräst werden muss, sondern durch Auftrennen eines zylindrischen Rohres in kürzester Zeit und ohne Nachbearbeitung hergestellt werden kann. Vorteilhafterweise besteht der Sicherungsring aus Metall.

Das erfindungsgemäße Verschlusselement ist für den Einsatz zum Verschließen von Rohren aus allen Materialien denkbar. Besonders geeignet ist das Verschlusselement jedoch zum Verschließen von Öffnungen von Rohren aus Kunststoff, vorzugsweise aus Polypropylen. Bei Untersuchungen des Anmelders hat sich herausgestellt, dass dieses Material so weich ist, dass sich der Sicherungsring besonders gut eindrücken lässt.

Weiterhin eignen sich Kunststoffe auch besonders gut für die Herstellung des Stopfenkörpers, vorzugsweise mit Stopfenkörper aus Polystyrol ließen sich sehr gute Dichtergebnisse erzielen.

Ein Ausführungsbeispiel der Erfindung ist in der Zeichnung dargestellt und wird im Folgenden näher beschrieben. In den Zeichnungsunterlagen bezeichnen gleiche Bezugszeichen gleiche Funktionsteile. Es zeigt in der Zeichnung die
- Figur 1: einen Längsschnitt durch ein Schalungsbindeelment bestehend Distanz- oder Hüllrohr, zwei Endstücken und zwei erfindungsgemäßen Verschlusselementen
- Figur 2: einen Schnitt durch ein unverschlossenes Endstück, einem Stopfenkörper und einen Sicherungsring im unmontierten Zustand
- Figur 3: einen Schnitt durch ein erfind ungsgemäßes Verschlusselement

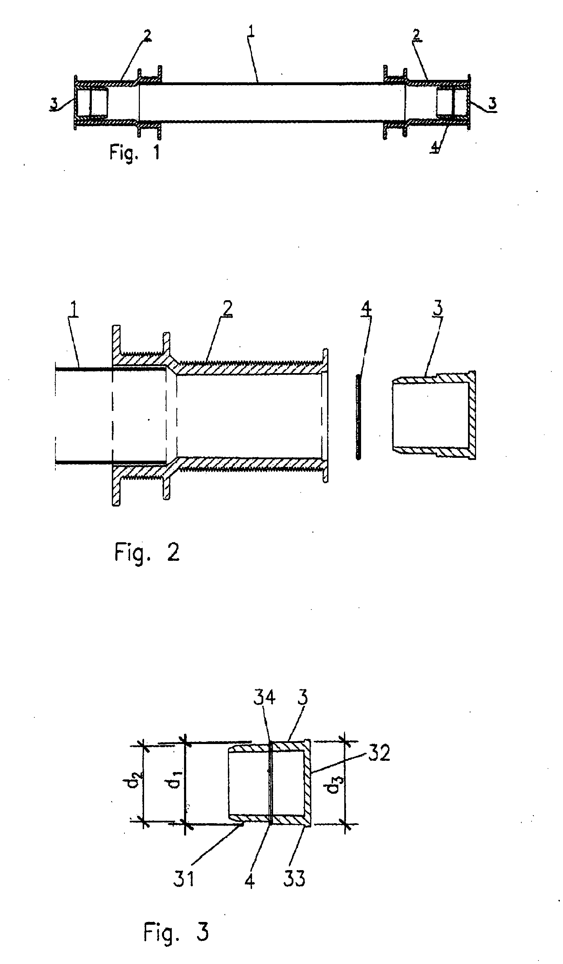

Figur 1 zeigt einen Längsschnitt durch ein Schalungsbindeelement mit einem Distanzrohr 1, an dessen beiden Enden jeweils ein Endstück 2 angeordnet ist. Beide Endstücke 2 sind mit einem erfindungsgemäßen Verschlusselement, das einen Stopfenköper 3 umfasst, derart verschlossen, dass die Außenkante des Endstücks 2 und die nach außen gewandte Schlagfläche 32 des Stopfenkörpers 3 und somit des-Verschlusselements eine bündige, plane Oberfläche ergeben. Das zugehörige Betonbauteil ist nicht dargestellt. Das erfindungsgemäße Verschlusselement, das einen Stopfenkörper 3 und einen Sicherungsring 4 umfasst, wurde bereits mittels eines Hammers in die Öffnung des Endstücks 2 eingeschlagen und befindet sich in seiner End- oder Dichtposition.

In dem Bereich, in dem sich der Sicherungsring 4 befindet, sind sowohl der Stopfenkörper 3 als auch das Endstück 2 verformt. Aufgrund der Krafteinwirkung, der geometrischen Verhältnisse und seiner größeren Härte hat der Sicherungsring 4 die beiden anderen Bauteile 2, 3 beim Montagevorgang verformt. Beim Einschlagvorgang wurde der Sicherungsring 4 derart in den Schaft 31 des Stopfenkörpers 3 und in die Innenwandung des Endstücks 2 gepresst, dass dort eine formschlüssige und fluiddichte Verbindung zwischen den drei Bauteilen entstanden ist.

Figur 2 zeigt einen Schnitt durch ein Endstück 2, einen Stopfenkörper 3 und einen Sicherungsring 4 in vergrößerter Darstellung. Das Hüllrohr 1 schließt mit dem Endstück 2 an der Oberfläche eines Betonbauteils (nicht dargestellt) ab. Aus der Darstellung wird deutlich, dass auch die Innenwandung des Rohres 2 eine konische Form aufweist, wobei sich der Innendurchmesser des Endstücks 2 von außen nach innen in Richtung des Hüllrohrs 1 verjüngt. Hierbei beträgt die Neigung der Innenwandung gegenüber einer Waagrechten vorzugsweise ein Grad.

In Figur 3 ist ein Verschlusselement vor dem Einbringen in die Öffnung des Hüllrohrs oder Endstücks 2 dargestellt. Der Stopfenkörper 3 des Verschlusselements weist eine ebene Schlagfläche 32 als Stopfendeckel und einen konischen Schaft 31 auf. Der konische Schaft 31 weist an seiner dem Stopfendeckel zugewandten Seite den größten Außendurchmesser d3 auf und ist derart versetzt zum Stopfendeckel angeordnet, dass sich auf der dem Hüllrohr 1 zugewandten Innenseite des Stopfenkörpers 3 eine Anschlageinrichtung 33 ergibt. Weiterhin weist der konische Schaft 31 des Stopfenkörpers 3 auf der dem Hüllrohr 1 zugewandten Seite einen Falz auf, so dass sich an dessen Außenmantel eine Ringschulter 34 ergibt. An dieser Ringschulter 34 kommt der Sicherungsring 4 zur Anlage, der einen Außendurchmesser d1 besitzt. Der Außendurchmesser d1 des Sicherungsrings 4 ist dabei kleiner als der maximale Außendurchmesser d3 des Schafts 31 des Stopfenkörpers 3 jedoch größer als der Außendurchmesser d2 des Schafts 31 im Dicht- und Befestigungsbereich, wenn sich das Verschlusselement in der Endposition befindet.

### Bezugezeichenliste

- 1: Rohr, Distanzrohr, Hüllrohr
- 2: Rohr, Endstück, Sperrkonus
- 3: Stopfenkörper
- 31: Schaft
- 32: Stopfendeckel, Schlagfläche
- 33: Stopp- oder Anschlageinrichtung
- 34: Ringschulter
- 4: Sicherungsring

- d1: Außendurchmesser des Sicherungsrings 4
- d2: Außendurchmesser des Schafts 31 des Stopfenkörpers 3 im Befestigungs- - und Dichtbereich
- d3: maximaler Außendurchmesser des Schafts 31 des Stopfenkörpers 3

## Patentansprüche

1. Verschlusselement
zum fluiddichten Verschließen von Öffnungen oder Rohren (1, 2) in Betonbauteilen mit
- einem Stopfenkörper (3), dereinen konischen Schaft (31) aufweist,
- wobei der Schaft (31) an seinem Außenmantel mit einem Dicht- oder Befestigungselement versehen ist,
**dadurch gekennzeichnet, dass**
- als Dicht- oder Befestigungselement ein einzelner separater Sicherungsring (4) vorgesehen ist,
-- der eine größere Härte und/oder eine größere Festigkeit als der Schaft (31) des Stopfen körpers (3) und/oder als das Hüllrohr (1, 2) aufweist und
-- dessen Außendurchmesser d1 größer als ein Innendurchmesser der Öffnung oder ein Innendurchmesser des Rohres(1, 2) vorgesehen ist.

2. Verschlusselement gemäß Anspruch 1, **dadurch gekennzeichnet, dass** der Sicherungsring (4) einen größeren Außendurchmesser d1 als der Außendurchmesser d2 des Stopfenkörpers (3) im Dicht- oder Befestigungsbereich besitzt.

3. Verschlusselement gemäß Anspruch 1 oder 2, **dadurch gekennzeichnet, dass** der Sicherungsring (4) einen kleineren Außendurchmesser d1 als der maximale Außendurchmesser d3 des Stopfenkörpers (3) besitzt.

4. Verschlusselement gemäß einem der vorhergehenden Ansprüche, **dadurch gekennzeichnet, dass** am Schaft (31) oder Außenmantel des Stopfenkörpers (3) ein Falz, eine Ringschulter (34) oder eine Nut zur Lagerung des Sicherungsrings (4) vorgesehen ist.

5. Verschlusselement gemäß einem der vorhergehenden Ansprüche, **dadurch gekennzeichnet, dass** am Stopfenkörper (3) eine Anlage - oder Stoppeinrichtung (33), vorzugsweise ein Falz vorgesehen ist.

6. Verschlusselement gemäß Anspruch 5, **dadurch gekennzeichnet, dass** am Stopfenkörper (3) als Anlage - oder Stoppeinrichtung (33) ein Falz vorgesehen ist.

7. Verschlusselement gemäß einem der vorhergehenden Ansprüche, **dadurch gekennzeichnet, dass** der Sicherungsring (4) einen rechteckigen Querschnitt aufweist.

8. Verschlusselement gemäß einem der vorhergehenden Ansprüche, **dadurch gekennzeichnet, dass** der Sicherungsring (4) aus Metall vorgesehen ist.

9. Verschlusselement gemäß einem der vorhergehenden Ansprüche, **dadurch gekennzeichnet, dass** der Stopfenkörper aus Kunststoff vorgesehen ist.

10. Verschlusselement gemäß einem der vorhergehenden Ansprüche, **dadurch gekennzeichnet, dass** das Hüllrohr aus Kunststoff vorgesehen ist.
